# EUROPÄISCHE PATENTSCHRIFT

(11) **EP 3 317 695 B1**
(45) Veröffentlichungstag und Bekanntmachung des Hinweises auf die Patenterteilung: **20.01.2021**
(21) Anmeldenummer: 16730366.8
(22) Anmeldetag: 16.06.2016
(51) Int. Cl.: G01S 17/88, G01S 17/89, G01S 7/481, G02B 7/02

(54) **SENSOREINRICHTUNG ZUR OPTISCHEN ERFASSUNG VON BETÄTIGUNGSGESTEN**
SENSOR DEVICE FOR THE OPTICAL DETECTION OF ACTUATION GESTURES
DISPOSITIF DE CAPTEUR POUR LA DÉTECTION OPTIQUE DE GESTES D'ACTIONNEMENT

(30) Priorität: 08.09.2015 DE 102015115098
(43) Veröffentlichungstag der Anmeldung: 09.05.2018
(73) Patentinhaber: Huf Hülsbeck & Fürst GmbH & Co. KG, 42551 Velbert (DE)
(72) Erfinder: STICHERLING, Nadine, 45257 Essen (DE)
(74) Vertreter: Zenz Patentanwälte Partnerschaft mbB
(86) Internationale Anmeldenummer: PCT/EP2016/063951
(87) Internationale Veröffentlichungsnummer: WO 2017/041916

(56) Entgegenhaltungen:
- EP-A1- 2 881 757
- DE-A1-102009 001 726
- JP-A- 2010 237 558
- KR-A- 20130 077 367
- US-A1- 2004 003 951
- US-A1- 2007 272 827
- US-A1- 2014 340 487

## Beschreibung

Die Erfindung betrifft eine Sensoreinrichtung nach Anspruch 1 zur optischen Erfassung von Objekten und deren räumlichen Bewegungen, insbesondere Bewegungsgesten, die von Personen ausgeführt werden, um einen Bedienwunsch zu signalisieren.

Die DE 10 2008 025 669 A1 offenbart einen optischen Sensor, welcher eine Geste detektiert, woraufhin ein Schließelement eines Fahrzeugs automatisch bewegt wird.

Die WO 2008/116699 A2 betrifft einen optischen Sensorchip und bezieht sich auf eine optische Einklemmschutzvorrichtung für die Überwachung einer Fensterscheibe, Schiebetür oder einer Heckklappe in einem Kraftfahrzeug.

Die WO 2012/084222 A1 offenbart einen optischen Sensor zur Betätigung und Überwachung eines Schließelements.

Im Bereich der optischen Erfassung sind Systeme bekannt, welche eine pixelbezogene Ortsinformation, insbesondere eine Distanz von der Sensor- oder Erfassungseinrichtung erfassen. Die WO 2013/001084 A1 offenbart ein System zur berührungslosen Erfassung von Gegenständen und Bediengesten mit einer optisch gestützten Einrichtung ähnlicher Art, wie sie auch für die Erfindung einsetzbar ist.

Diese Systeme werden beispielsweise, je nach angewandtem Auswertungsverfahren, als "Time-of-flight"-Systeme oder auch als "3D-Imager" oder "Range Imager" bezeichnet. Die Anwendungsgebiete solcher Systeme liegen im Bereich der industriellen Automatisierungstechnik, in der Sicherheitstechnik und im Automobilbereich. In einem Auto werden 3D-Sensoren in Spurhaltesystemen, zum Fußgängerschutz oder als Einparkhilfe eingesetzt. Sowohl Konzepte der Triangulation als auch der Interferometrie und auch der Lichtlaufzeitmessung (Time-of-flight (ToF)) können mit optischen Sensoren umgesetzt werden. In diesem Zusammenhang wird auf diesbezügliche Ausarbeitungen verwiesen, welche die technischen Konzepte und deren Realisierung detailliert beschreiben, insbesondere die Dissertation "Photodetektoren und Auslesekonzepte für 3D-Time-of-Flight-Bildsensoren in 0,35 µm-Standard-CMOS-Technologie", Andreas Spickermann, Fakultät für Ingenieurwissenschaften der, Universität Duisburg-Essen, 2010.

Außerdem wird auf die Publikation "Optimized Distance Measurement with 3D-CMOS Image Sensor and Real-Time Processing of the 3D Data for Applications in Automotive and Safety Engineering", Bernhard König, Fakultät für Ingenieurwissenschaften der Universität Duisburg-Essen, 2008 verwiesen.

Die vorgenannten Arbeiten beschreiben das Konzept und die Realisierung von einsetzbaren optischen Sensorsystemen, so dass im Rahmen dieser Anmeldung auf deren Offenbarung verwiesen wird und nur zum Verständnis der Anmeldung relevante Aspekte erläutert werden.

In der EP 2 881 757 A1 ist eine Time-of-Flight Kamera für ein Melksystem beschrieben. Die dort beschriebene Kamera ist in einem kompakten Gehäuse mit austauschbarer Frontseite aufgenommen, welche ein Sichtfenster enthält.

Aus der US 2007/0272827 ist ein Bildsensor mit einem Linsenpaket bekannt. Ein Träger des Linsenpakets stützt sich auf dem Chip ab.

Die JP 2010 237558 offenbart einen Linsenträger für einen optischen Sensor, wobei der Träger sich auf einem Chip abstützt und diesen seitlich umgreift.

Das Dokument DE 10 2009 001 726 A1 offenbart einen Linsenhalter für ein optisches Messgerät, wobei eine Frontplatte eine Linse aufnimmt und mit einem Optikträger über ein Befestigungselement verklebbar ist. Das Befestigungselement besteht aus einem lichtdurchlässigen Kunststoff, welcher eine Härtung eines Klebstoffes durch das Befestigungselement erlaubt.

Die Erfindung betrifft eine Sensoranordnung welche das Time-of-Flight-(ToF)Verfahren nutzt, so dass dieses hier kurz erläutert wird.

Beim ToF-Verfahren wird ein Raumbereich mit einer Lichtquelle beleuchtet und die Laufzeit des von einem Objekt im Raumbereich zurück reflektierten Lichtes mit einem Flächensensor aufgenommen. Dazu sollten Lichtquelle und Sensor möglichst nah zueinander angeordnet sein. Aus dem linearen Zusammenhang von Lichtlaufzeit und Lichtgeschwindigkeit lässt sich die Distanz zwischen Sensor und Messobjekt bestimmen. Zur Messung der zeitlichen Verzögerung muss eine Synchronisation zwischen Lichtquelle und Sensor gegeben sein. Durch die Nutzung gepulster Lichtquellen können die Verfahren optimiert werden, denn kurze Lichtpulse (im ns-Bereich) ermöglichen eine effiziente Hintergrundlichtunterdrückung. Außerdem werden durch die Verwendung des gepulsten Lichts mögliche Mehrdeutigkeiten bei der Bestimmung der Distanz vermieden, so lange der Abstand genügend groß ist.

Einerseits wird bei diesem Konzept die Lichtquelle gepulst betrieben. Außerdem wird die Detektionseinheit, also das Pixelarray gepulst sensitiv geschaltet, also das

Integrationsfenster der einzelnen Pixel wird zeitlich mit der Lichtquelle synchronisiert und in der Integrationsdauer begrenzt. Durch den Vergleich von Ergebnissen mit unterschiedlichen Integrationsdauern können insbesondere Effekte von Hintergrundlicht herausgerechnet werden.

Wesentlich ist, dass diese Erfassungsmethode keine rein bildbasierte Erfassungsmethode ist. Es wir bei jedem Pixel eine Abstandsinformation ermittelt, was durch die zeitliche Lichtdetektion erfolgt. Bei Verwendung eines Pixelarrays liegt schließlich eine Matrix von Abstandswerten vor, welche bei zyklischer Erfassung eine Interpretation und Verfolgung von Objektbewegungen zulässt.

Die Sensoreinrichtung weist also eine 3D-Kamera in Gestalt einer Time-of-Flight-Kamera auf. Dazu verfügt die 3D-Kamera über eine Pulslichtquelle und einen lichtsensitiven Erfassungschip.

Die Pulslichtquelle und der Erfassungschip sind in einem gemeinsamen Bauraum auf einer Platine angeordnet und zu einem Erfassungsbereich der 3D-Kamera ausgerichtet. Der Erfassungschip weist eine sensitive Fläche zur Registrierung von auftreffender elektromagnetischer Strahlung eines bestimmten Wellenlängenbereichs (z.B. im Infrarot-Bereich) auf sowie ein umgebendes Chipgehäuse. Das Chipgehäuse umfasst den Erfassungschip hinsichtlich seiner Komponenten und seiner Kontakte zur Anbringung auf der Platine, lässt jedoch den optisch sensitiven Bereich frei, damit Strahlung ungehindert auftreffen kann.

Die Anforderungen an Fertigungstoleranzen und Justage sind bei optischen Systemen der genannten Art anspruchsvoll. Gleichwohl müssen derartige Sensoren in hoher Stückzahl und geringen Kosten gefertigt werden, wenn sie in Fahrzeugen zur Bedienung eingesetzt werden.

Aufgabe der Erfindung ist es, eine einfach und kostengünstig zu montierende Sensoreinrichtung zur Anordnung an einem Kraftfahrzeug bereitzustellen.

Diese Aufgabe wird gelöst durch eine Sensoreinrichtung mit den Merkmalen des Patentanspruchs 1.

Die erfindungsgemäße Sensoreinrichtung weist einen Erfassungschip auf, dem eine Optik zugeordnet ist. Der Erfassungschip ist auf der Platine befestigt und die Optik ist auf oder über dem Erfassungschip angeordnet. Das Optikgehäuse wird auf der Platine befestigt und weist dazu sich seitlich vom Chipgehäuse erstreckende Befestigungsmittel auf. Die Befestigung des Optikgehäuses erfolgt also nicht am Erfassungschip selbst, sondern neben dem Erfassungschip an der Platine.

Aufgrund von Fertigungstoleranzen wird nicht immer ein identischer Abstand zwischen Erfassungschip und Platine vorliegen und damit auch kein gleichbleibender Abstand der sensitiven Oberseite des Erfassungschips von der unterliegenden Platine. Auch bei der Befestigung der Optik an der Platine kann im Rahmen der Fertigungstoleranzen einer preisgünstigen Produktion keine präzise Ausrichtung der Optik hinsichtlich des Abstandes von der Platine gewährleistet werden.

Um Fertigungstoleranzen zu kompensieren weist das Optikgehäuse der Sensoreinrichtung gemäß der Erfindung einen Hülsenabschnitt auf, in welchem ein Linsenhalter axial verstellbar geführt ist. Der Hülsenabschnitt ist ein Bestandteil des Gehäuses, der starr mit der Platine verbunden wird. In dem Hülsenabschnitt kann der Linsenhalter mit darin angeordneten Linsen axial verstellt werden. Eine axiale Verstellung bezeichnet hier die Verstellung entlang der Sichtachse des Erfassungschips, also senkrecht zu der Chipoberfläche und senkrecht zu der unterliegenden Platine.

Es sind Verstellmittel an dem Hülsenabschnitt und korrespondierende Mittel am Linsenhalter angeordnet, die für eine axiale Verstellbarkeit des Linsenhalters in dem Hülsenabschnitt zusammenwirken. Nach erfolgter Befestigung des Erfassungschips auf der Platine und des Optikgehäuses mit seinem Hülsenabschnitt an der Platine kann eine Justage der axialen Position des Linsenhalters und der darin befindlichen Linsen oder des darin befindlichen Linsenpakets vorgenommen werden. Eine solche Justage kann beispielsweise durch Abbildung einer standardisierten Beleuchtungsanordnung auf dem Erfassungschip erfolgen, beispielsweise indem eine Fokussierung von einer entfernten Lichtquelle vorgenommen wird. Diese Fokussierung kann bereits anhand der Chipsignale erfolgen, wenn der Erfassungschip mit einer entsprechenden Ausleseeinrichtung gekoppelt wird. Ist die Justage des Linsenhalters in dem Hülsenabschnitt in axialer Richtung abgeschlossen, wird der Linsenhalter gegenüber dem Hülsenabschnitt festgelegt, beispielsweise durch Einbringung eines Klebstoffes zwischen Hülsenabschnitt und Linsenhalter oder einer sonstigen Arretierung der axialen Position.

Eine bevorzugte Ausführungsform sieht vor, dass der Hülsenabschnitt ein Innengewinde als Verstellmittel aufweist und der Linsenhalter ein Außengewinde aufweist, welches in das Innengewinde des Hülsenabschnitts eingreift. Durch einfaches Verdrehen und Ein- oder Ausschrauben des Linsenhalters in den Hülsenabschnitt kann eine axiale Verstellung des Linsenhalters und der darin befindlichen Linsen vorgenommen werden. Besonders vorteilhaft ist es dabei, wenn der Linsenhalter entsprechende stirnseitige Ausnehmungen aufweist, in welche mit einem Werkzeug einzugreifen ist, um die Drehung des Linsenhalters auszuführen. Beispielsweise können stirnseitige Kerbungen vorgesehen sein, in die ein gabelartiger Schlüssel zur Verstellung eingreift.

In einer alternativen Gestaltung kann der Hülsenabschnitt ein Lager für eine Rändelschraube aufweisen, wobei die Rändelschraube mit einem Innengewinde in ein Außengewinde des Linsenhalters eingreift und so durch Drehen der Rändelschraube ein Verstellen des Hülsenabschnitts in axialer Richtung erlaubt. Die Rändelschraube erstreckt sich mit ihrem Außenumfang entsprechend wenigstens abschnittsweise außerhalb des Hülsenabschnitts, um ein Zugriff und eine Drehung der Rändelschraube zu ermöglichen.

In einer alternativen Gestaltung ist der Linsenhalter mit einer stirnseitigen Rampe versehen, welche sich an einem Vorsprung im Inneren des Hülsenabschnitts abstützt, um den Linsenhalter durch Drehung und Abgleiten der Rampe an dem Vorsprung axial zu verstellen.

Der Linsenhalter kann an seiner unteren Stirnseite eine umlaufende Rampe aufweisen und der Hülsenabschnitt kann an seiner Innenseite eine korrespondierende umlaufende Rampe aufweisen. Je nach Drehstellung des Linsenhalters gegenüber dem Hülsenabschnitt stützt sich die Rampe des Hülsenabschnittes an unterschiedlichen Abschnitten an der Rampe des Linsenhalters ab und es erfolgt eine axiale Verstellung. Eine derartige Anordnung ist besonders einfach und günstig zu formen und erfordert keine Schneidung eines Gewindes.

Vorzugsweise weist das Optikgehäuse drei Befestigungsbeine auf, die in zugehörige Öffnungen der Platine eintauchen. Eine solche Drei-Bein-Befestigung erlaubt eine wackelfreie und stabile Anordnung des Optikgehäuses über dem Erfassungschip und stellt sicher, dass eine nachfolgende Justage durch Verstellung des Linsenhalters in dem Hülsenabschnitt vom Optikgehäuse dauerhaft die korrekte Ausrichtung der Linsen im Linsenhalter gegenüber dem Erfassungschip sichert.

Die Erfindung wird nun anhand der beiliegenden Zeichnungen näher erläutert.
Figur 1a zeigt beispielhaft eine Sensoreinrichtung einer ersten Ausführungsform;
Figur 1b zeigt die Anordnung aus Figur 1a in einer Draufsicht;
Figur 2a zeigt das Optikgehäuse der ersten Ausführungsform in einer perspektivischen Ansicht;
Figur 2b zeigt das Optikgehäuse mit axial herausgezogenem Linsenhalter;
Figur 2c zeigt eine Schnittansicht des Optikgehäuses mit freigelegtem Linsenpaket.

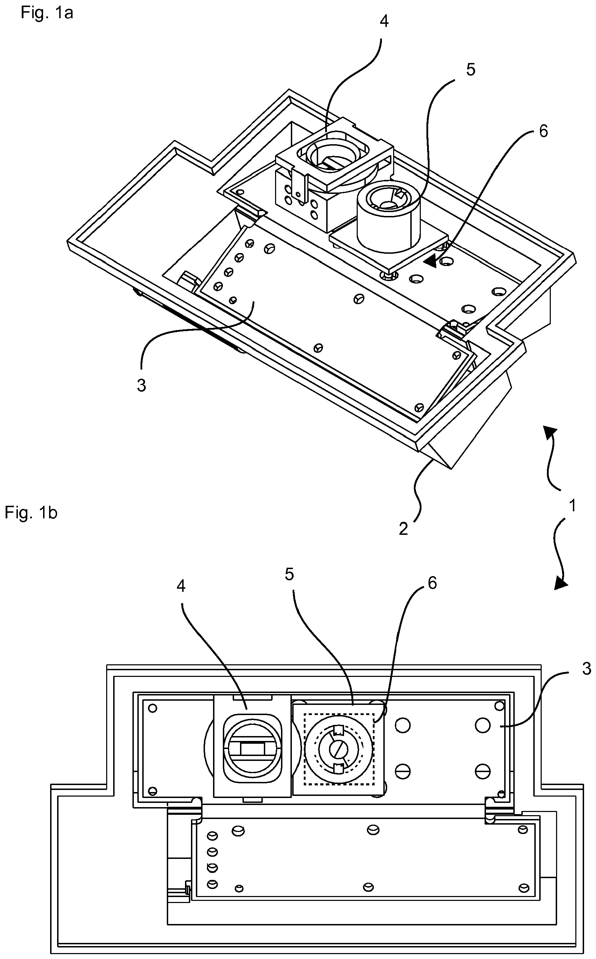

In Figur 1a ist eine Sensoranordnung 1 gezeigt. In einem Gehäuse 2 ist eine Platine 3 angeordnet. Auf der Platine ist eine Pulslichtquelle 4 mit einer Laserdiode und einer vorgesetzten Optik angeordnet sowie eine Empfangsoptik 5. Unter der Empfangsoptik 5 ist auf der Platine ein Erfassungschip 6 angeordnet, der in diesen Darstellungen zwischen Platine 3 und Empfangsoptik 5 sitzt und entsprechend verdeckt ist. Daher ist die Lage des Erfassungschips in Figur 1b gestrichelt dargestellt.

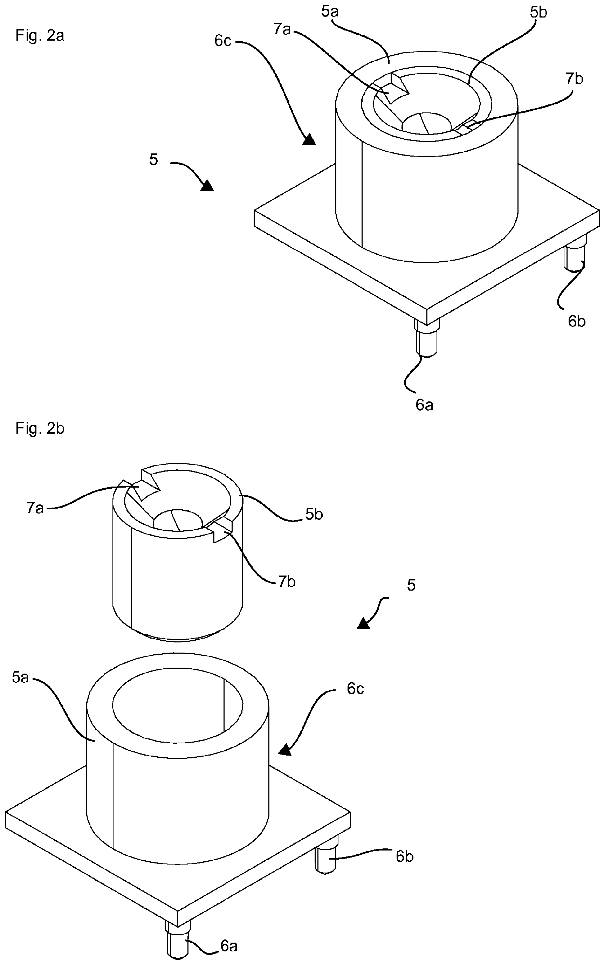

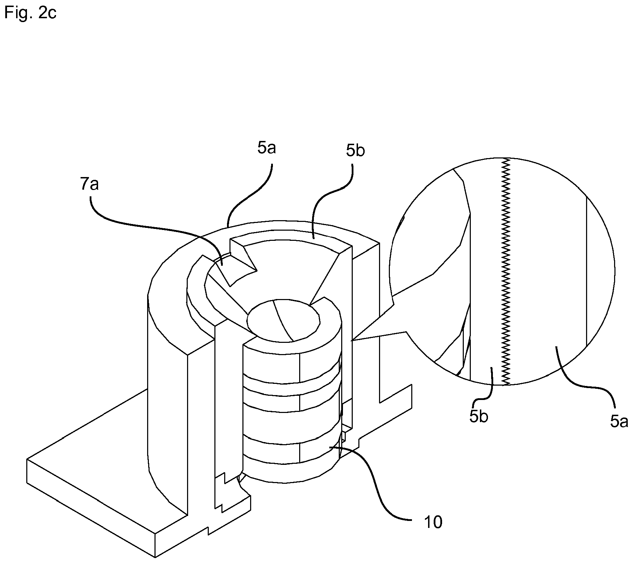

Im Betrieb wird Licht von der gepulst betriebenen Lichtquelle 4 in einen Erfassungsraum abgestrahlt und die Verzögerung bis zum Eintreffen von zurückgeworfenem Licht wird in der Erfassungsoptik 5 und auf dem Erfassungschip 6 raumaufgelöst detektiert. Die Komponenten bilden also eine sogenannte Time-of-Flight-Kamera gemäß dem Stand der Technik. Die über dem Erfassungschip 6 angeordnete Optik 5 ist in Figur 2a deutlicher gezeigt. Das Optikgehäuse 5 weist Befestigungsbeine 6a, 6b auf. Ein drittes Befestigungsbein 6c ist in dieser perspektivischen Ansicht verdeckt. Das Objektgehäuse 5 hat ein Hülsenabschnitt 5a und einen Linsenhalter 5b. Der Linsenhalter 5b ist axial verstellbar in dem Hülsenabschnitt 5a aufgenommen. Wie in Figur 2b gezeigt, kann der Linsenhalter 5b axial aus dem Hülsenabschnitt 5a entnommen werden. Der Linsenhalter 5b weist Kerbungen 7a, 7b auf, in welche mit einem Werkzeug zum Drehen des Linsenhalters 5b in dem Hülsenabschnitt 5a eingegriffen werden kann. Der Linsenhalter 5b verfügt an seiner Außenseite über ein Außengewinde, während der Hülsenabschnitt 5a über ein Innengewinde verfügt. Das Zusammenwirken der Gewinde zwischen den Bauteilen 5a und 5b ist in Figur 2c zu erkennen. Dort ist dargestellt, dass ein Außengewinde des Linsenhalters 5b in ein Innengewinde des Hülsenabschnitts 5a eingreift. In dem Linsenhalter 5b ist ein Linsenpaket 10 aufgenommen, welches sowohl optische Linsen als auch Abstandshalter aufweist. Es ist erkennbar, dass durch Drehen des Linsenhalters 5b in der Hülse 5a eine axiale Verstellung des Abstandes des Linsenpaketes 10 von einer unterliegenden sensitiven Oberfläche vorgenommen werden kann.

Eine entsprechend gefertigte optische Erfassungseinrichtung ist günstig zu fertigen, da eine endgültige optische Justage der Empfangsoptik in einfacher und ggf. automatisierter Form nach Montage der Komponenten auf der Platine erfolgen kann und die Fertigung entsprechend in einem kostengünstigen Rahmen zu halten ist.

## Patentansprüche

1. Sensoreinrichtung (1) zur optischen Erfassung von Objekten und deren räumlichen Bewegungen, aufweisend,
eine 3D-Kamera, die räumliche Daten mit einem Laufzeitverfahren erfasst, wobei die 3D-Kamera eine Pulslichtquelle (4) und einen lichtsensitiven Erfassungschip aufweist,
wobei die Pulslichtquelle (4) und der Erfassungschip (6) in einem gemeinsamen Bauraum auf einer Platine (3) angeordnet sind und beide zu einem Erfassungsbereich der 3D-Kamera ausgerichtet sind, wobei der Erfassungschip eine sensitive Fläche und ein Chipgehäuse aufweist, wobei auf dem Erfassungschip eine Empfangsoptik in einem Optikgehäuse (5) angeordnet ist, wobei das Optikgehäuse (5) Befestigungsmittel (6a, 6b, 6c) aufweist, die sich seitlich vom Chipgehäuse und bis wenigstens zur Platine (3) erstrecken, und wobei das Optikgehäuse (5) zur Kompensation von Fertigungstoleranzen einen Hülsenabschnitt (5a) aufweist, in welchem ein Linsenhalter (5b) axial, nämlich senkrecht zu der sensitiven Fläche und der unterliegenden Platine verstellbar geführt ist, wobei Verstellmittel an dem Hülsenabschnitt (5a) angeordnet sind und mit korrespondierenden Mitteln am Linsenhalter (5b) zusammenwirken.

2. Sensoreinrichtung nach Anspruch 1, wobei der Hülsenabschnitt (5a) ein Innengewinde als Verstellmittel aufweist und wobei der Linsenhalter (5b) ein Außengewinde aufweist, welches in das Innengewinde des Hülsenabschnitts eingreift.

3. Sensoreinrichtung nach Anspruch 2, wobei der Linsenhalter (5b) stirnseitige Ausnehmungen (7a, 7b) aufweist, in welche zum Schrauben des Linsenhalters in den Hülsenabschnitts (5a) mit einem Werkzeug eingegriffen werden kann.

4. Sensoreinrichtung nach Anspruch 1, wobei der Hülsenabschnitt ein Lager für eine Rändelschraube mit einem Innengewinde aufweist und wobei der Linsenhalter ein Außengewinde aufweist, welches in das Innengewinde der Rändelschraube eingreift, wobei sich die Rändelschraube mit ihrem Außenumfang wenigstens abschnittsweise außerhalb des Hülsenabschnitts erstreckt.

5. Sensoreinrichtung nach Anspruch 1, wobei der Linsenhalter wenigstens eine stirnseitige Rampe aufweist, welche sich an einem Vorsprung in dem Hülsenabschnitt abstützt, um den Linsenhalter durch Drehung und Abgleiten der Rampe an dem Vorsprung axial zu verstellen.

6. Sensoreinrichtung nach einem der vorangehenden Ansprüche, wobei das Optikgehäuse drei Befestigungsbeine (6a, 6b, 6c) aufweist, die in zugehörige Öffnungen der Platine eintauchen.

## Claims

1. Sensor device (1) for optical detection of objects and their spatial movements, comprising,
a 3D camera that acquires spatial data using a time-of-flight method, the 3D camera comprising a pulse light source (4) and a light-sensitive detection chip,
wherein the pulse light source (4) and the detection chip are arranged in a common installation space on a board (3) and both are aligned with a detection area of the 3D camera, the detection chip having a sensitive surface and a chip package,
wherein a receiving optic is arranged on the detection chip in an optics housing (5),
wherein the optics housing (5) has fastening means (6a, 6b, 6c) which extend along the sides of the chip housing and at least up to the board (3), and
the optics housing (5) has a sleeve section (5a) for compensating manufacturing tolerances, in which a lens holder (5b) is guided in an axially adjustable manner, namely perpendicularly to the sensitive surface and the underlying board, wherein adjusting means are arranged on the sleeve section (5a) and cooperate with corresponding means on the lens holder (5b).

2. Sensor device according to claim 1, wherein the sleeve portion (5a) has an internal thread as adjusting means and wherein the lens holder (5b) has an external thread which engages in the internal thread of the sleeve portion.

3. Sensor device according to claim 2, wherein the lens holder (5b) has end recesses (7a, 7b) in which a tool can be engaged to screw the lens holder into the sleeve portion (5a).

4. Sensor device according to claim 1, wherein the sleeve portion has a bearing for a knurled screw with an internal thread and wherein the lens holder has an external thread which engages in the internal thread of the knurled screw, wherein the knurled screw extends with its outer circumference at least in sections outside the sleeve portion.

5. Sensor device according to claim 1, wherein the lens holder has at least one frontal ramp which rests on a projection in the sleeve portion to axially adjust the lens holder by rotation and sliding of the ramp on the projection.

6. Sensor means according to any of the foregoing claims, wherein the optics housing has three mounting legs (6a, 6b, 6c) which are immersed in associated apertures of the circuit board.

## Revendications

1. Dispositif capteur (1) pour la détection optique d'objets et de leurs mouvements spatiaux, comprenant
une caméra 3D qui acquiert des données spatiales en utilisant une méthode de temps de vol, la caméra 3D comprenant une source de lumière pulsée (4) et une puce de détection sensible à la lumière,
dans laquelle la source de lumière pulsée (4) et la puce de détection (6) sont disposées dans un espace d'installation commun sur une carte de circuit imprimé (3) et toutes deux sont alignées avec une zone de détection de la caméra 3D, la puce de détection ayant une surface sensible et un boîtier de puce,
dans lequel une optique de réception est disposée sur la puce de détection dans un boîtier optique (5),
dans lequel le boîtier optique (5) comporte des moyens de fixation (6a, 6b, 6c) qui s'étendent latéralement à partir du boîtier de la puce et au moins jusqu'à la carte (3), et dans lequel
le boîtier optique (5) présente une section de manchon (5a) pour compenser les tolérances de fabrication, dans laquelle un porte-lentille (5b) est guidé de manière réglable axialement, c'est-à-dire perpendiculairement à la surface sensible et à la carte de circuit imprimé étant soumise, des moyens de réglage étant disposés sur la section de manchon (5a) et coopérant avec des moyens correspondants sur le porte-lentille (5b).

2. Dispositif capteur selon la revendication 1, dans lequel la partie de manchon (5a) présente un filetage intérieur comme moyen de réglage et dans lequel le support de lentille (5b) présente un filetage extérieur qui s'engage dans le filetage intérieur de la partie de manchon.

3. Dispositif capteur selon la revendication 2, dans lequel le porte-lentille (5b) présente des évidements d'extrémité (7a, 7b) dans lesquels un outil peut appliquer pour visser le porte-lentille dans la partie de manchon (5a).

4. Dispositif capteur selon la revendication 1, dans lequel la partie de manchon présente un palier pour une vis moletée avec un filetage intérieur et dans lequel le porte-lentille présente un filetage extérieur qui s'engage dans le filetage intérieur de la vis moletée, dans lequel la vis moletée s'étend avec sa circonférence extérieure au moins par sections à l'extérieur de la partie de manchon.

5. Dispositif capteur selon la revendication 1, dans lequel le porte-objectif a au moins une rampe frontale qui repose sur une projection dans la partie de manchon pour ajuster axialement le porte-lentille par rotation et glissement de la rampe sur la projection.

6. Dispositif capteur selon l'une des revendications précédentes, dans lequel le boîtier optique a trois pattes de montage (6a, 6b, 6c) qui sont immergées dans des ouvertures associées de la carte de circuit imprimé.
